# EUROPÄISCHE PATENTSCHRIFT

(11) **EP 3 647 607 B1**
(45) Veröffentlichungstag und Bekanntmachung des Hinweises auf die Patenterteilung: **02.03.2022**
(21) Anmeldenummer: 18203803.4
(22) Anmeldetag: 31.10.2018
(51) Int. Cl.: F16B 7/06, F16G 11/12, F16C 7/06

(54) **KOPPELEINRICHTUNG**
COUPLING DEVICE
DISPOSITIF BIELLE

(43) Veröffentlichungstag der Anmeldung: 06.05.2020
(73) Patentinhaber: SACS Aerospace GmbH, 72186 Empfingen (DE)
(72) Erfinder: BLANK, Eugen, 78662 Bösingen (DE); KUHM, Rolf, 71063 Sindelfingen (DE)
(74) Vertreter: Patentanwälte Magenbauer & Kollegen Partnerschaft mbB

(56) Entgegenhaltungen:
- EP-A1- 2 320 100
- DE-B3-102005 006 050
- GB-A- 524 717

## Beschreibung

Die Erfindung betrifft eine Koppeleinrichtung zur kraftübertragenden Kopplung zweier Komponenten, mit einem ersten Koppelteil, das eine erste Koppelschnittstelle umfasst, die für eine Festlegung an einer ersten Komponente ausgebildet ist, und mit einem zweiten Koppelteil, das eine zweite Koppelschnittstelle umfasst, die für eine Festlegung an einer zweiten Komponente ausgebildet ist, sowie mit einer Koppelstange, die mit einem ersten Endbereich drehbeweglich um eine Drehachse mit dem ersten Koppelteil verbunden ist und die mit einem zweiten Endbereich drehbeweglich um die Drehachse mit dem zweiten Koppelteil verbunden ist, wobei der erste Endbereich und das erste Koppelteil eine erste Gewindeanordnung für die Einstellung eines Abstands zwischen dem ersten Koppelteil und dem zweiten Koppelteil bilden.

Aus der EP 1 588 975 A2 ist ein Abhängeelement bekannt, das zwei Befestigungselemente umfasst, welche jeweils einen SchaftSchaft aufweisen, wobei wenigstens ein SchaftSchaft ein Gewinde aufweist, wobei das Abhängeelement ferner ein Mittelelement aufweist, welches in wenigstens einer der Stirnflächen eine Gewindehülse oder ein in die Innenfläche des Mittelelements eingeschnittenes Gewinde aufweist und in welches an den sich gegenüberliegenden Stirnflächen die Befestigungselemente eingreifen, wobei wenigstens einer der Schäfte, welche ein Gewinde aufweisen, an seiner Stirnfläche eine Zahnscheibe mit radial verlaufenden Zähnen aufweist, welche in auf der Stirnfläche einer Gegenzahnscheibe angeordnete radial verlaufende Zähne eingreifen, wobei die Gegenzahnscheibe auf ihrer Rückenfläche mit einem Federelement beaufschlagt wird.

Die EP 2 320 100 A1 betrifft eine Zug-Druck-Stange umfassend eine Befestigungsvorrichtung, ein Anschlussstück mit in Axialrichtung voneinander distanzierten Stirnenden sowie eine Rastvorrichtung mit in axialer Richtung gesehen jeweils einander zugewendeten sowie zusammenwirkenden ersten und zweiten Rastelementen, welche mittels eines Federelements aneinander gedrückt sind. Das Federelement ist mit seinem ersten Ende an einer am Anschlussstück ausgebildeten Stützschulter und mit seinem zweiten Ende am zweiten Rastelement abgestützt. Die Drehbewegung der Befestigungsvorrichtung relativ bezüglich dem Anschlussstück wird durch die Rastelemente in einer Mehrzahl von Drehstellungen mit einer vorbestimmten Verriegelungskraft lösbar arretiert.

Die GB 524 717 A offenbart ein Schraubenmittel zum Spannen von Drähten, Stangen, Ketten oder dergleichen, wobei ein Reibschlusselement, das lose auf einem verjüngten Endabschnitt der Schraube angeordnet ist, einen Vorsprung aufweist, der in eine Längsnut in der Innenseite des mit einem Gewinde versehenen Elements des Spannschlosses eingreift und Kronenzähne aufweist, die federnd gegen Kronenzähne der Schraube angepresst werden, wobei eine Wendelfeder zwischen dem Reibschlusselement und einem verjüngten Endabschnitt der Schraube angeordnet ist.

Die Aufgabe der Erfindung besteht darin, eine Koppeleinrichtung mit vereinfachtem Aufbau und verbesserter Montageweise bereitzustellen.

Diese Aufgabe wird für eine Koppeleinrichtung der eingangs genannten Art mit den Merkmalen des Anspruchs 1 gelöst. Hierbei ist vorgesehen, dass der ersten Gewindeanordnung eine erste Bremseinrichtung zugeordnet ist, die für eine, insbesondere ausschließlich, reibschlüssige Bremsmomentübertragung zwischen dem ersten Koppelteil und dem ersten Endbereich ausgebildet ist. Abweichend von der aus dem Stand der Technik bekannten Zahnscheibenanordnung ermöglicht die erfindungsgemäße Bremseinrichtung eine feinfühlige Einstellung des Abstands zwischen dem ersten Koppelteil und dem zweiten Koppelteil durch eine Rotationsbewegung der Koppelstange um die Drehachse. Beispielhaft ist vorgesehen, dass das zweite Koppelteil ausschließlich drehbeweglich mit der Koppelstange verbunden ist, so dass eine Drehbewegung der Koppelstange nicht zu einer relativen Positionsveränderung des zweiten Koppelteils gegenüber der Koppelstange führt. Hingegen ist aufgrund der ersten Gewindeanordnung gewährleistet, dass bei einer Drehbewegung der Koppelstange um die Drehachse eine lineare Verlagerung des ersten Koppelteils gegenüber der Koppelstange stattfindet. Dies setzt voraus, dass ein auf die Koppelstange eingeleitetes Drehmoment durch eine Anbringung des ersten Koppelteils an einer ersten Komponente, bei der es sich beispielsweise um eine Gepäckbox in einem Flugzeug handeln kann, abgestützt wird und somit eine Schraubbewegung in der ersten Gewindeanordnung stattfindet. Die Aufgabe der Bremseinrichtung besteht darin, ein Bremsmoment bereitzustellen, das zusätzlich zum Reibmoment in der Gewindeanordnung wirkt und eine unerwünschte Veränderung des Abstands zwischen dem ersten Koppelteil und dem zweiten Koppelteil verhindert. Das von der Bremseinrichtung bereitgestellte Bremsmoment kann durch eine Kraft beschrieben werden, die normal zu einer Ebene ausgerichtet ist, die die Drehachse mit umfasst, wobei ein Kraftangriffspunkt für diese Kraft beabstandet von der Drehachse angeordnet ist. Dementsprechend wirkt das Bremsmoment um die Drehachse herum.

Zweckmäßig ist es, wenn die erste Bremseinrichtung für eine stufenlose Drehbewegung zwischen dem ersten Koppelteil und dem ersten Endbereich ausgebildet ist und/oder wenn der zweite Endbereich und das zweite Koppelteil eine zweite Gewindeanordnung für eine Einstellung eines Abstands zwischen dem ersten Koppelteil und dem zweiten Koppelteil bilden und/oder wenn der zweiten Gewindeanordnung eine zweite Bremseinrichtung zugeordnet ist, die gleichartig wie die erste Bremseinrichtung, insbesondere identisch zur ersten Bremseinrichtung, ausgebildet ist. Die vorwiegend, insbesondere ausschließlich, reibschlüssige wirkende Bremseinrichtung ermöglicht eine stufenlose Drehbewegung zwischen dem ersten Koppelteil und dem ersten Endbereich zur stufenlosen Einstellung des Abstands zwischen dem ersten Koppelteil und dem zweiten Koppelteil. Ferner kann die erste Bremseinrichtung mit einfachen und dadurch kostengünstigen Komponenten verwirklicht werden, so dass die Herstellkosten für die Koppeleinrichtung reduziert werden können. Ergänzend oder alternativ ist vorgesehen, dass der zweite Endbereich und das zweite Koppelteil eine zweite Gewindeanordnung sowie gegebenenfalls eine zugeordnete zweite Bremseinrichtung umfassen. Bevorzugt ist vorgesehen, dass die erste Gewindeanordnung als Rechtsgewinde und die zweite Gewindeanordnung als Linksgewinde ausgebildet ist, so dass bei einer Rotation der Koppelstange um die Drehachse eine gleichzeitige Veränderung der relativen Positionen des ersten Koppelteils und des zweiten Koppelteils gegenüber der Koppelstange stattfindet. Besonders bevorzugt ist vorgesehen, dass die erste Gewindeanordnung und die zweite Gewindeanordnung betragsmäßig gleiche Gewindesteigungen aufweisen, so dass bei einer Rotation der Koppelstange um die Drehachse eine synchrone Abstandsveränderung des ersten Koppelteils und des zweiten Koppelteils gegenüber der Koppelstange stattfindet.

Erfindungsgemäß ist vorgesehen, dass der erste Endbereich der Koppelstange eine Adapterhülse umfasst, an der ein Stangenabschnitt und/oder ein Rohrabschnitt der Koppelstange festgelegt ist und die einen ersten Gewindebereich umfasst, der mit einem ersten Gewindeabschnitt des ersten Koppelteils verschraubt ist, um die erste Gewindeanordnung zu bilden. Vorzugsweise wird die Adapterhülse in einer Doppelfunktion genutzt, da sie einerseits einen ersten Gewindebereich aufweist, der wahlweise als Außengewinde oder als Innengewinde ausgebildet sein kann und mit einem korrespondierenden Gewindeabschnitt des ersten Koppelteils verschraubt wird und andererseits für eine Aufnahme der Bremseinrichtung genutzt werden kann, so dass diese insbesondere vor Umwelteinflüssen geschützt verwirklicht werden kann. Die Adapterhülse kann beispielsweise einstückig als Endbereich der Koppelstange ausgebildet sein. Bevorzugt ist vorgesehen, dass die Adapterhülse als separates Bauteil ausgebildet ist, das beispielsweise nach Montage der Bremseinrichtung mit einem Stangenabschnitt oder einem Rohrabschnitt der Koppelstange verbunden wird. Besonders bevorzugt ist vorgesehen, dass die Koppelstange endseitig einen becherförmigen Bereich aufweist, der mit einem Innengewinde versehen ist und der auf ein Außengewinde der Adapterhülse aufgeschraubt und dort drehfest festgelegt werden kann, insbesondere durch Verkleben oder Verschweißen und/oder durch plastische Umformung wie beispielsweise Verstemmen.

Bevorzugt ist vorgesehen, dass der erste Gewindeabschnitt des ersten Koppelteils als Außengewinde ausgebildet ist und dass der erste Gewindebereich der Adapterhülse als Innengewinde ausgebildet ist. Hierdurch lässt sich eine besonders kompakte Gestaltung des ersten Koppelteils sowie der Adapterhülse verwirklichen.

Erfindungsgemäß ist ferner vorgesehen, dass die erste Bremseinrichtung einen drehfest am ersten Koppelteil aufgenommenen Bremsbelag und eine drehfest am ersten Endbereich aufgenommene Bremsplatte umfasst, wobei der Bremsbelag längs der Drehachse verschieblich am ersten Koppelteil aufgenommen ist und/oder wobei die Bremsplatte längs der Drehachse verschieblich am ersten Endbereich aufgenommen ist. Um eine vorteilhafte Bremswirkung für die Bremseinrichtung gewährleisten zu können ist vorgesehen, dass wenigstens eine Komponente aus der Gruppe Bremsbelag, Bremsplatte linearbeweglich längs der Drehachse verschieblich gelagert ist, um eine flächige Anlage an der jeweils anderen Komponente aus der Gruppe Bremsbelag, Bremsplatte zu gewährleisten. Grundsätzlich kann vorgesehen sein, dass der Bremsbelag einstückig mit dem ersten Koppelteil ausgebildet ist oder dass die Bremsplatte einstückig am ersten Endbereich der Koppelstange ausgebildet ist. Vorzugsweise ist vorgesehen, dass sowohl der Bremsbelag als auch die Bremsplatte als separate Bauteile ausgebildet sind, von denen jeweils wenigstens eines längs der Drehachse verschieblich gelagert ist. Besonders bevorzugt ist, dass sowohl der Bremsbelag als auch die Bremsplatte längs der Drehachse verschieblich gelagert sind.

In weiterer Ausgestaltung der Erfindung ist vorgesehen, dass die erste Bremseinrichtung eine zwischen dem ersten Koppelteil und dem ersten Endbereich angeordnete Federanordnung umfasst, die für eine Einleitung einer längs der Drehachse ausgerichteten Normalkraftkomponente auf den Bremsbelag und die Bremsplatte ausgebildet ist. Vorzugsweise sind die Federanordnung, der Bremsbelag und die Bremsplatte derart aufeinander abgestimmt, dass das von der Bremseinrichtung aufzubringende Bremsmoment von einer radialen Anordnung und Ausdehnung vom Bremsbelag und von der Bremsplatte ausgebildeten Gleitfläche, einem Reibungskoeffizienten zwischen Bremsbelag und Bremsplatte sowie einer längs der Drehachse ausgerichteten Normalkraftkomponente abhängt. Die Aufgabe der Federeinrichtung besteht darin, stets eine Mindestnormalkraftkomponente auf den Bremsbelag und die Bremsplatte einwirken zu lassen.

Erfindungsgemäß ist auch vorgesehen, dass die erste Bremseinrichtung eine Einstellanordnung zur Einstellung einer längs der Drehachse ausgerichteten Normalkraftkomponente auf den Bremsbelag und die Bremsplatte umfasst. Beispielhaft ist vorgesehen, dass mit Hilfe der Einstellanordnung ein Anpressdruck zwischen Bremsbelag und Bremsplatte eingestellt wird, um das von der Bremseinrichtung aufgebrachte Bremsmoment zu beeinflussen. Besonders bevorzugt umfasst die Einstellanordnung eine Einstellschraube, mit deren Hilfe ein Abstand zwischen Bremsbelag und Bremsplatte zur Beeinflussung der Normalkraftkomponente eingestellt werden kann. Alternativ kann vorgesehen sein, dass die Einstellanordnung ein insbesondere linearbeweglich gelagertes Einstellelement umfasst, das nach einer Einstellung der gewünschten Normalkraftkomponente formschlüssig, beispielsweise durch plastische Deformation, und/oder stoffschlüssig festgelegt wird.

Vorteilhaft ist es, wenn an einem dem ersten Koppelteil abgewandten Endbereich der Adapterhülse ein koaxial zur Drehachse und zur Gewindeanordnung ausgebildeter Rohrabschnitt ausgebildet ist, der an einer Rohrwand eine längs der Drehachse erstreckte Stütznut aufweist und der die Bremsplatte und den Bremsbelag umgibt. Mit dem Rohrabschnitt kann die Adapterhülse eine weitere Doppelfunktion einnehmen, einerseits dient sie zur Aufnahme der Bremsplatte und des Bremsbelags und andererseits wird die über die längs der Drehachse erstreckte Stütznut zur Abstützung einer Bremskraft genutzt, die durch die Wechselwirkung von Bremsplatte und Bremsbelag während einer Drehbewegung der Koppelstange auftritt. Vorzugsweise ist der Rohrabschnitt kreiszylindrisch ausgebildet und die Stütznut an einer Innenoberfläche des Rohrabschnitts ausgebildet. Bevorzugt ist vorgesehen, dass die Stütznut schlitzförmig die gesamte Rohrwand des Rohrabschnitts durchsetzt und sich längs der Drehachse erstreckt.

Bevorzugt ist vorgesehen, dass eine größte Oberfläche der Bremsplatte und eine größte Oberfläche des Bremsbelags jeweils quer zur Drehachse ausgerichtet sind, dass die Bremsplatte wenigstens einen in radialer Richtung zur Drehachse erstreckten Vorsprung aufweist, der in die Stütznut eingreift und dass der Bremsbelag und das erste Koppelteil eine formschlüssig drehfeste Verbindung ausbilden. Um eine, insbesondere ausschließlich, reibschlüssige Verbindung zwischen dem ersten Koppelteil und dem ersten Endbereich zu gewährleisten, ist vorzugsweise vorgesehen, dass eine größte Oberfläche der Bremsplatte und eine größte Oberfläche des Bremsbelags jeweils eben ausgebildet sind und jeweils quer zur Drehachse ausgerichtet sind. Ferner ist die Bremsplatte mit einem in radialer Richtung erstreckten Vorsprung versehen, der in die Stütznut eingreift, die im Rohrabschnitt der Adapterhülse ausgebildet ist, um hierüber eine Drehmomentabstützung für die Bremsplatte zu gewährleisten. Ferner ist vorgesehen, dass der Bremsbelag und das erste Koppelteil formschlüssig drehfest miteinander verbunden sind, um auch hier eine Drehmomentabstützung zu gewährleisten. Dementsprechend kann beispielsweise bei einer Drehmomenteinleitung in die Koppelstange, insbesondere durch manuelles Drehen der Koppelstange um die Drehachse, eine Drehmomenteinleitung in die fest mit der Koppelstange verbundene Adapterhülse erfolgen. Von dort aus erfolgt eine Weiterleitung des Drehmoments über die Stütznut und den Vorsprung der Bremsplatte auf die Bremsplatte, die mit ihrer größten Oberfläche reibschlüssig an der größten Oberfläche des Bremsbelags anliegt. Von dort aus wird das Reibmoment auf den Bremsbelag übertragen, der seinerseits dieses Reibmoment als Drehmoment, insbesondere mittels einer formschlüssigen Verbindung, auf das erste Koppelteil überträgt.

Bei einer vorteilhaften Weiterbildung der Erfindung ist vorgesehen, dass die Bremsplatte und der Bremsbelag längs der Drehachse auf einem dem ersten Koppelteil zugehörigen Trägerteil aufgereiht sind, wobei das Trägerteil mit einer unrunden Außengeometrie freigängig in eine Freilaufausnehmung in der Bremsplatte und formschlüssig in eine Koppelausnehmung im Bremsbelag eingreift. Dabei kommt dem Trägerteil eine Funktion zur Abstützung des Drehmoments des Bremsbelags zu. Hierbei ist vorgesehen, dass das Trägerteil mit seiner unrunden Außengeometrie, die insbesondere einen quadratischen Querschnitt aufweisen kann, formschlüssig in eine korrespondierend ausgebildete Koppelausnehmung im Bremsbelag eingreift und hierdurch eine Drehmomentübertragung zwischen Trägerteil und Bremsbelag ermöglicht wird. Hingegen ist die Bremsplatte mit einer, insbesondere kreisrund ausgebildeten, Freilaufausnehmung versehen, bei der es unabhängig von einer relativen Rotationsstellung gegenüber dem Trägerteil nicht zu einer formschlüssigen Kopplung mit dem Trägerteil kommt, so dass die Bremsplatte freigängig drehbar auf dem Trägerteil aufgenommen ist. Bevorzugt ist vorgesehen, dass die Bremsplatte und der Bremsbelag zwischen einer axial ausgerichteten Stirnfläche des Trägerteils und einer axial ausgerichteten Anlagefläche eines drehfest und linearbeweglich sowie längs der Drehachse mit einstellbarem Abstand am Trägerteil angebrachten Gegenhalters aufgenommen sind. Exemplarisch ist vorgesehen, dass der Gegenhalter mit dem Trägerteil eine Einstellanordnung zur Einstellung einer längs der Drehachse ausgerichteten Normalkraftkomponente auf den Bremsbelag und die Bremsplatte ausbildet. Durch die Anlage der Bremsplatte oder des Bremsbelags an einer axial ausgerichteten Stirnfläche des Trägerteils sowie durch die Anlage der Bremsplatte oder des Bremsbelags an einer axial ausgerichteten Anlagefläche des Gegenhalters wird eine flächige Abstützung der Bremsplatte und des Bremsbelags sowie eine vorteilhafte Einleitung von Normalkräften auf die Bremsplatte und den Bremsbelag gewährleistet. Mit der Einstellanordnung kann ein Abstand zwischen der Stirnfläche des Trägerteils und der Axialfläche des Gegenhalters sowie der dazwischen aufgenommenen Bremsplatte und des Bremsbelags vorgenommen werden, um Einfluss auf die Normalkräfte zu nehmen, die zwischen Bremsplatte und Bremsbelag wirken. Hiermit erfolgt die Einstellung des Bremsmoments, das durch die erste Bremseinrichtung bereitgestellt werden kann. Vorzugsweise ist vorgesehen, dass der Gegenhalter von einer Schraube durchsetzt wird, die in das Trägerteil eingeschraubt wird und deren Schraubenkopf am Gegenhalter abgestützt ist, so dass durch Einschrauben oder ein Ausschrauben dieser Schraube in das Trägerteil bzw. aus dem Trägerteil der Abstand zwischen Gegenhalter und Trägerteil variiert werden kann.

Zweckmäßig ist es, wenn die Federanordnung wenigstens eine in axialer Richtung längs der Drehachse vorgespannte Feder aus der Gruppe: Wendelfeder, Wellringfeder, Federring, umfasst. Je nach Auswahl der Feder kann durch eine Verstellung des Abstands zwischen Gegenhalter und Trägerteil eine proportionale oder progressive oder degressive Veränderung der Normalkraft erreicht werden, die zwischen Bremsbelag und Bremsplatte wirkt, um hierdurch die gewünschte Anpassung des Bremsmoments bewirken zu können. Beispielhaft kann vorgesehen sein, dass in der Stirnfläche des Trägerteils und/oder in der Anlagefläche des Gegenhalters mehrere axial längs der Drehachse ausgerichtete Bohrungen eingebracht sind, in denen jeweils eine Wendelfeder aufgenommen ist, die die Normalkraft auf die Bremsplatte und den Bremsbelag bereitstellt. Alternativ kann vorgesehen sein, eine ringförmig ausgebildete Wellringfeder zwischen Bremsplatte oder Bremsbelag und die korrespondierende Stirnfläche oder Anlagefläche anzuordnen, um hiermit die gewünschte Vorspannung zur Bereitstellung einer Normalkraftkomponente zu gewährleisten.

In weiterer Ausgestaltung der Erfindung ist vorgesehen, dass mehrere Bremsplatten und mehrere Bremsbeläge längs der Drehachse abwechselnd auf dem Trägerteil aufgereiht sind. Hierdurch wird die Anzahl der für die Bereitstellung des Bremsmoments wirksamen Reibflächen, die jeweils zwischen Bremsplatte und Bremsbelag ausgebildet sind, vervielfältigt, so dass auch eine Multiplikation des Bremsmoments erzielt werden kann. Exemplarisch kann vorgesehen sein, dass ein Reibungskoeffizient zwischen Bremsplatte und Bremsbelag durch eine gezielte Materialauswahl für Bremsplatte und Bremsbelag in einem vorgebbaren Intervall angesiedelt wird. Beispielhaft kann vorgesehen werden, dass die Bremsplatte und der Bremsbelag jeweils aus Metall hergestellt sind und dass wenigstens eine Komponente aus der Gruppe Bremsplatte und Bremsbelag mit einer Beschichtung, insbesondere mit einer Kunststoffbeschichtung oder mit einer Gleitfilmbeschichtung, versehen sind, um eine definierte Reibpaarung zu bilden.

Bei einer nicht zur Erfindung gehörenden Variante der Koppeleinrichtung ist vorgesehen, dass an einem dem ersten Koppelteil abgewandten Endbereich der Adapterhülse ein koaxial zur Drehachse und zur Gewindeanordnung ausgebildeter Hülsenabschnitt ausgebildet ist, der mit einer Innenumfangsfläche an einer Außenumfangsfläche einer Spreizhülse reibschlüssig anliegt, um die erste Bremseinrichtung zu bilden. Bei dieser Ausgestaltung der Koppeleinrichtung kann mit einer minimalen Anzahl von Bauteilen ebenfalls eine erste Bremseinrichtung gebildet werden, die vorzugsweise ein fest vorgebbares Bremsmoment bereitstellt, das sich insbesondere aus der Auswahl der Passung zwischen der Außenumfangsfläche der Spreizhülse und der reibschlüssig daran anliegenden Innenumfangsfläche der Adapterhülse ergibt. Beispielhaft kann vorgesehen sein, dass die Außenumfangsfläche oder die Innenumfangsfläche als metallische Oberfläche oder als Kunststoffoberfläche, insbesondere als mit einer Kunststoffschicht versehene Metallfläche ausgebildet ist.

Bei einer Weiterbildung der nicht zur Erfindung gehörenden Variante ist vorgesehen, dass dem ersten Koppelteil ein Bremsteil zugeordnet ist, das drehfest, insbesondere ortsfest oder linearbeweglich mit einstellbarem Abstand, am ersten Koppelteil angebracht ist und das eine abschnittsweise kreiszylindrische oder konusförmige Außenumfangsfläche umfasst, die zur Aufnahme in einer Koppelausnehmung der Spreizhülse ausgebildet ist. Bei einer kreiszylindrischen Ausgestaltung der Außenumfangsfläche des Bremsteils sowie einer ortsfesten und drehfesten Festlegung des Bremsteils am ersten Koppelteil ist ein festes Bremsmoment vorgegeben. Bei einer konusförmigen Ausgestaltung der Außenumfangsfläche sowie einer drehfesten und linearbeweglichen Anordnung des Bremsteils am ersten Koppelteil kann durch eine Einstelleinrichtung eine axiale Verlagerung des Bremsteils gegenüber der, vorzugsweise an einer Innenumfangsfläche ebenfalls konusabschnittsförmig ausgebildeten, Spreizhülse bewirkt werden. Hierdurch erfolgt eine Durchmesserveränderung für die Spreizhülse, womit eine Anpassung des Bremsmoments erzielt werden kann.

Vorteilhafte Ausführungsformen der Erfindung sind in der Zeichnung dargestellt. Hierbei zeigt:
- Figur 1: eine perspektivische Darstellung einer Koppeleinrichtung mit zwei Koppelteilen, wobei jedem der Koppelteile eine Bremseinrichtung zugeordnet ist,
- Figur 2: eine perspektivische Explosionsdarstellung eines Koppelteils mit der zugehörigen Bremseinrichtung, und
- Figur 3: eine perspektivische Darstellung eines nicht zur Erfindung gehörenden Koppelteils mit zugehöriger Bremseinrichtung.

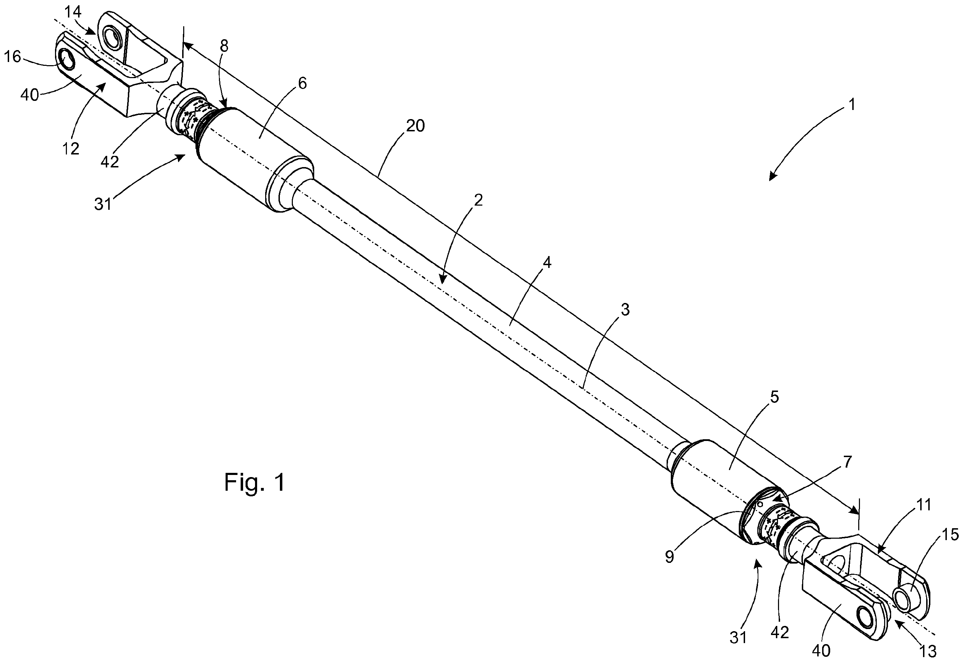

Eine in der Figur 1 dargestellte Koppeleinrichtung 1 ist zur Übertragung von Zugkräften und/oder Druckkräften zwischen einem ersten Koppelteil 11 und einem zweiten Koppelteil 12 ausgebildet. Rein exemplarisch sind die beiden Koppelteile 11 und 12 gleichartig, insbesondere in der Art einer Gelenkgabel ausgebildet. Jedes der Koppelteile 11, 12 umfasst eine Koppelschnittstelle 13, 14, die zur Ankopplung an eine nicht näher dargestellte Komponente, beispielsweise eine Tragstruktur eines Flugzeugs oder eine im Flugzeug zu befestigende Gepäckbox, ausgebildet ist. Hierzu sind an jedem der Koppelteil 11, 12 jeweils Bohrungen mit darin aufgenommenen ersten Gelenkbuchsen 15 bzw. zweiten Gelenkbuchsen 16 vorgesehen, mit denen unter Zuhilfenahme von nicht näher dargestellten Bolzen oder Schrauben die gewünschte Festlegung des jeweiligen Koppelteils 11, 12 an der nicht dargestellten Komponente bewirkt werden kann.

Die Koppeleinrichtung 1 umfasst ferner eine zwischen den beiden Koppelteilen 11 und 12 erstreckte Koppelstange 2, die rein exemplarisch aus einem längs einer Mittelachse 3 erstreckten zentralen Rohrabschnitt 4 und jeweils endseitig am Rohrabschnitt 4 angebrachten, becherförmig ausgebildeten ersten und zweiten Endstücken 5, 6 versehen ist. Wahlweise kann vorgesehen sein, dass der Rohrabschnitt 4 und die Endstücke 5, 6 als separate Bauteile hergestellt und anschließend in einem Fügevorgang fest miteinander verbunden werden. Alternativ kann vorgesehen sein, dass der Rohrabschnitt 4 und die Endstücke 5 und 6 einstückig ausgebildet sind.

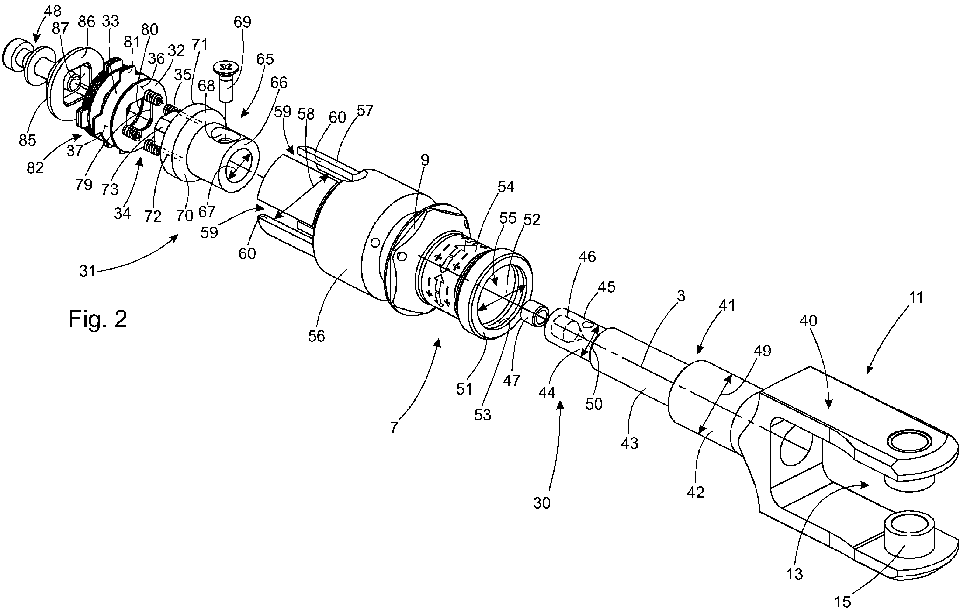

Exemplarisch ist vorgesehen, dass im ersten Endstück 5 eine in der Figur 2 näher dargestellte erste Adapterhülse 7 aufgenommen ist und dass im zweiten Endstück 6 eine gleichartig ausgebildete zweite Adapterhülse 8 aufgenommen ist.

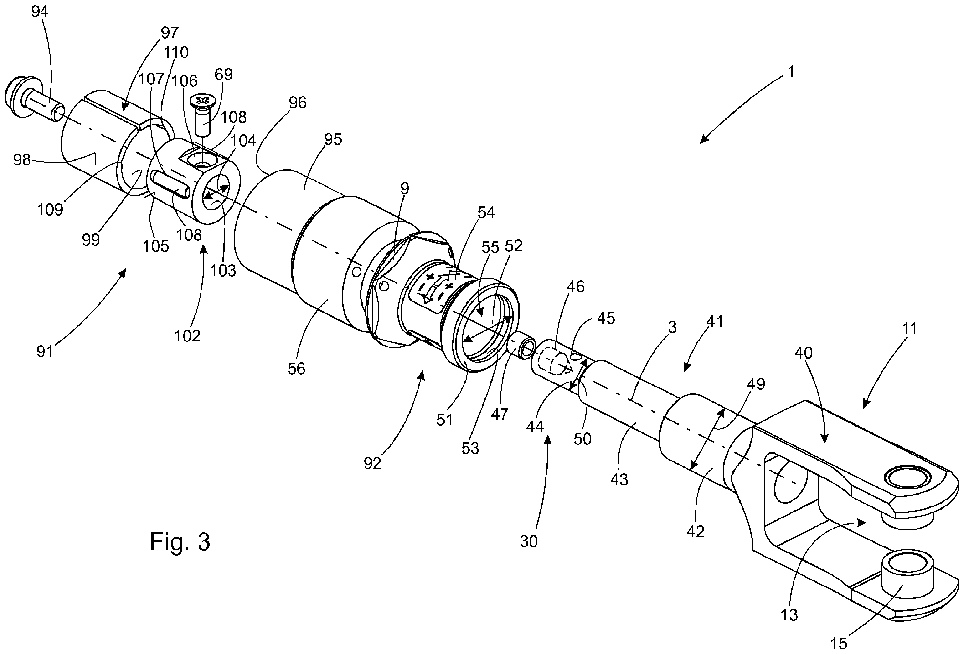

Wie nachstehend im Zusammenhang mit den Figuren 2 und 3 erläutert wird, sind die Koppelstange 2 und die Koppelteile 11 und 12 derart aufeinander abgestimmt, dass bei einer drehfesten Festlegung der Koppelteile 11 und 12 an nicht näher dargestellten Komponenten und bei einer Einleitung einer Rotationsbewegung auf die Koppelstange 2 um die Mittelachse 3 eine Einstellung eines Abstands 20 zwischen dem ersten Koppelteil 11 und dem zweiten Koppelteil 12 bewirkt werden kann. Durch diese Abstandseinstellung kann die Koppeleinrichtung 1 dazu eingesetzt werden, eine zu befestigende Komponente in eine gewünschte räumliche Lage gegenüber einer anderen Komponente zu bringen.

Exemplarisch ist vorgesehen, die Koppeleinrichtung 1 zur Festlegung und Positionseinstellung von Gepäckboxen innerhalb eines Verkehrsflugzeugs zu nutzen. Zu diesem Zweck wird das erste Koppelteil 11 oder das zweite Koppelteil 12 mit einer Tragstruktur am Flugzeugrumpf verbunden, während das jeweils andere Koppelteil 11, 12 mit einer Gepäckbox verbunden wird. Hierbei ist vorgesehen, dass jedes der Koppelteile 11, 12 drehfest festgelegt ist, so dass bei einer anschließenden Rotation der Koppelstange 2 um die Mittelachse 3 die gewünschte Abstandsveränderung zwischen den beiden Koppelteilen 11 und 12 vollzogen werden kann. Beispielhaft ist vorgesehen, dass eine Einleitung einer Rotationsbewegung auf die Koppelstange 2 um die Mittelachse 3 mit Hilfe eines nicht dargestellten Gabelschlüssels erfolgt, der an jeweils paarweise parallel zueinander ausgerichteten Schlüsselflächen 9, 10 der Adapterhülse 7 bzw. 8 angesetzt werden kann, um ein Drehmoment auf die Koppelstange 2 einzuleiten. Ergänzend oder alternativ kann vorgesehen sein, dass eine rein manuelle Drehmomenteinleitung auf die Außenoberflächen der Endstücke 5 und 6 erfolgt, hierbei ist vorteilhaft, wenn diese Außenoberflächen in nicht näher dargestellter Weise mit einer definierten Oberflächenrauhigkeit verwirklicht sind, was beispielsweise durch Anbringung einer Rändelung erfolgen kann. Das für eine Rotation der Koppelstange 2 um die Mittelachse 3 erforderliche Drehmoment wird zum einen durch die im Zusammenhang mit den Figuren 2 und 3 näher beschriebene Gewindeanordnung 30, die durch die Koppelstange 2, die jeweilige Adapterhülse 7 oder 8 und das zugeordnete Koppelteil 11 oder 12 gebildet wird, bestimmt. Ferner ist bei der Ausführungsform der Koppeleinrichtung 1 gemäß der Figur 1 vorgesehen, dass jedem der Koppelteile 11, 12 eine ebenfalls in den Figuren 2 und 3 näher dargestellte Bremseinrichtung 31, 91 zugeordnet ist, die für eine Bereitstellung eines Bremsmoments zwischen der Koppelstange 2 und dem jeweiligen Koppelteil 11 bzw. 12 ausgebildet ist.

Aus der Darstellung der Figur 2 ist eine erste Ausführungsform der Bremseinrichtung 31 zu erkennen, bei der rein exemplarisch mehrere Bremsplatten 32 und Bremsbeläge 33 jeweils wechselseitig längs der Mittelachse 3 aneinandergereiht sind und durch eine Federanordnung 34, die rein exemplarisch vier Wendelfedern 35 umfasst, aneinander gepresst werden. Hierbei können die Bremsplatten 32 und die Bremsbeläge 33 aufgrund der reibschlüssigen Anlage ihrer jeweiligen größten Oberflächen 36, 37 ein Bremsmoment bereitstellen, das eine unerwünschte Rotationsbewegung der Koppelstange 2 gegenüber dem jeweiligen Koppelteil 11 bzw. 12 verhindert.

Nachstehend wird die Bremseinrichtung 31 im Zusammenhang mit dem Koppelteil 11 beschrieben, dem Koppelteil 12 kann in gleicher Weise eine identische oder ähnliche Bremseinrichtung 31 zugeordnet sein.

Beispielhaft ist vorgesehen, dass das Koppelteil 11 ausgehend von einem U-förmig profilierten, gabelförmigen Befestigungsabschnitt 40 einen längs der Mittelachse 3 erstreckten Schaft 41 aufweist, der rein exemplarisch in drei unterschiedliche Durchmesserbereiche abgestuft ist. Dabei schließt sich unmittelbar an den Befestigungsabschnitt 40 ein Führungsabschnitt 42 mit kreiszylindrischer Gestalt an, an den sich ein Gewindeabschnitt 43 anschließt, der mit einem nicht näher dargestellten Außengewinde versehen ist und an den sich ein Koppelabschnitt 44 anschließt, der rein exemplarisch kreiszylindrisch ausgebildet ist. Beispielhaft umfasst der Koppelabschnitt 44 eine quer zur Mittelachse 3 ausgerichtete Aufnahmebohrung 45 sowie eine stirnseitig koaxial zur Mittelachse 3 eingebrachte, lediglich gestrichelt dargestellte Längsbohrung 46. Die Längsbohrung 46 ist zur Aufnahme eines Federstahl-Gewindeeinsatzes (beispielsweise eines Helicoil-Einsatzes) 47 vorgesehen, der in Wechselwirkung mit einer darin einzuschrauben Einstellschraube 48 ein definiertes Drehmoment für eine Rotationsbewegung der Einstellschraube 48 gegenüber dem Koppelteil 11 um die Mittelachse 3 gewährleistet.

Die Adapterhülse 7 (und in gleicher Weise die Adapterhülse 8) ist rein exemplarisch im Wesentlichen rotationssymmetrisch zur Mittelachse 3 gestaltet und umfasst mehrere längs der Mittelachse 3 aneinandergereihte und vorzugsweise einstückig miteinander verbundene Funktionsabschnitte. Beispielhaft ist ein dem Koppelteil 11 zugewandter erster Funktionsabschnitt als kreisringförmiger Führungsring 51 ausgebildet, dessen Innendurchmesser 52 auf einen Außendurchmesser 49 des Führungsabschnitts 42 derart angepasst ist, dass diese Komponenten eine leichtgängige Übergangspassung mit einem minimalen Bewegungsspalt bilden. Hierdurch ist die Adapterhülse 7 am Koppelteil 11 in vorteilhafter Weise gegenüber während des Einsatzes der Koppeleinrichtung 1 möglicherweise auftretenden, quer zur Mittelachse 3 ausgerichteten Kraftkomponenten geführt. Bevorzugt kann vorgesehen sein, dass am Innendurchmesser 52 des Führungsrings 51 eine umlaufende Nut eingestochen ist, in die ein Gleitring 53, der vorzugsweise aus einem Kunststoffmaterial hergestellt sein kann, insbesondere als O-Ring mit zusätzlicher Dichtfunktion ausgebildet ist, aufgenommen ist, mit dem eine günstige Kombination von niedriger Reibung und geringem Bewegungsspalt sowie ggf. eine Abdichtung zwischen dem Führungsring 51 und dem Führungsabschnitt 42 verwirklicht werden kann.

An den Führungsring 51 schließt sich als zweiter Funktionsabschnitt ein Distanzring 54 an, dessen Innendurchmesser 55 größer als der Außendurchmesser 49 des Führungsabschnitts 42 gewählt ist, um eine freie Längsbeweglichkeit der Adapterhülse 7 gegenüber dem ersten Koppelteil 11 zu gewährleisten.

An den Distanzring 54 schließt sich als dritter Funktionsabschnitt eine Innengewindehülse 56 an, deren nicht näher dargestellte Innenoberfläche mit einem Innengewinde versehen ist, das auf den Gewindeabschnitts 43 angepasst ist. Hierdurch wird eine Gewindeanordnung gebildet, bei der durch Rotation der Adapterhülse 7 gegenüber dem Koppelteil 11 eine Abstandseinstellung längs der Mittelachse 3 zwischen Adapterhülse 7 und Koppelteil 11 bewirkt werden kann. Ferner kann die Innengewindehülse 56 zusätzlich mit einem nicht näher dargestellten Außengewinde versehen sein, auf das das jeweilige Endstück 5, 6 der Koppelstange 2, das mit einem korrespondierend ausgebildeten Innengewinde versehen sein kann, aufgeschraubt werden kann.

An die Innengewindehülse 56 schließt sich als vierter Funktionsabschnitt eine Mitnehmerhülse 57 an, die rein exemplarisch als kreiszylindrische Hülse ausgebildet ist und die einen Innendurchmesser 58 aufweist, der erheblich größer als der Durchmesser des Gewindeabschnitts 43 des Koppelteils 11 ausgebildet ist. Beispielhaft ist die Mitnehmerhülse 57 mit vier jeweils in 90-Grad-Teilung angeordneten, längs der Mittelachse 3 mit jeweils parallel zueinander ausgerichteten Seitenwänden 60 ausgebildete Führungsschlitzen 59 vorgesehen, die sich exemplarisch über die gesamte Länge der Mitnehmerhülse 57 erstrecken.

Ferner ist der Bremseinrichtung 31 ein Trägerteil 66 zugehörig, das seinerseits drei Funktionsabschnitte aufweist, die auf das Koppelteil 11 sowie die Adapterhülse 7 angepasst sind. Ein erster Funktionsabschnitt des Trägerteils 55 ist als Koppelstange 66 ausgebildet, deren Innendurchmesser 67 auf einen Außendurchmesser 50 des Koppelabschnitts 44 des Koppelteils 11 angepasst ist, um ein spielarmes Aufschieben des Trägerteils 65 auf den Schaft 41 des Koppelteils 11 zu ermöglichen. Für eine Festlegung des Trägerteils 65 am Koppelteil 11 ist das Trägerteil 65 im Bereich der Koppelstange 66 mit einer Querbohrung 68 versehen, die zur Aufnahme einer Befestigungsschraube 69 ausgebildet ist. Die Befestigungsschraube 69 wird in die als Gewindebohrung ausgebildete Aufnahmebohrung 45 des Koppelabschnitts 44 eingeschraubt und gewährleistet damit sowohl eine Festlegung des Trägerteils 65 am Koppelabschnitt 44 in Längsrichtung der Mittelachse 3 als auch im Hinblick auf eine Drehmomentübertragung zwischen Koppelteil 11 und Trägerteil 65.

An die Koppelhülse 66 schließt sich als zweiter Funktionsabschnitt ein Ringteil 70 an, dessen dem Koppelteil 11 abgewandte, quer zur Mittelachse 3 ausgerichtete Stirnfläche 71 mit rein exemplarisch vier längs der Mittelachse 3 erstreckten, in der Figur 2 nur durch gestrichelte Mittellinien angedeuteten Führungsbohrungen 73 zur Aufnahme der zylindrisch ausgebildeten, parallel zur Mittelachse 3 ausgerichteten Wendelfedern 35 versehen ist.

Die in den Führungsbohrungen 72 abgestürzten Wendelfedern 35 stützen sich rein exemplarisch an einer größten Oberfläche 37 des nächstliegenden Bremsbelags 33 ab, der seinerseits mit seiner dem Trägerteil 65 abgewandten größten Oberfläche 37 an der größten Oberfläche 36 der benachbart angeordneten Bremsplatte 32 reibschlüssig anliegt. Dabei ist vorgesehen, dass der Bremsbelag 33 eine Ausnehmung 80 aufweist, die in gleicher Weise wie ein als Mitnehmer 73 ausgebildeter dritter Funktionsabschnitt des Trägerteils 65 gestaltet ist, um eine formschlüssige Drehmomentübertragung zwischen dem Trägerteil 65 und dem Bremsbelag 33 zu ermöglichen.

Beispielhaft sind die Ausnehmung 80 und der Mitnehmer 73 mit einer im Wesentlichen quadratischen Profilierung längs der Mittelachse 3 versehen. Demgegenüber ist die Bremsplatte 32 beispielhaft mit einer kreisförmigen Ausnehmung 79 versehen, deren Durchmesser größer als ein maximaler Querschnitt des Mitnehmers 73 in einer nicht dargestellten, quer zur Mittelachse 3 ausgerichteten Querschnittsebene ist, so dass die Bremsplatte 32 freigängig am Mitnehmer 73 aufgenommen ist und eine Rotationsbewegung um die Mittelachse 3 gegenüber dem Mitnehmer 73 durchführen kann.

Die Bremsplatte 32 ist ihrerseits mit mehreren in radialer Richtung ausgehend von der Mittelachse 3 nach außen erstreckten Vorsprüngen 81 versehen, die formschlüssig in die Führungsschlitze 59 der Mitnehmerhülse 57 eingreifen und hierdurch eine Drehmomentabstützung der Bremsplatten 32 an der Adapterhülse 7 ermöglichen. An die rein exemplarisch aus vier Bremsplatten 32 und drei Bremsbelägen 33 gebildete Reibanordnung 82 schließt sich längs der Mittelachse 3 ein Gegenhalter 85 an. Dieser liegt mit einer axial ausgerichteten Stirnfläche 86 an der größten Oberfläche 37 des benachbart angeordneten Bremsbelags 33 an und weist eine Ausnehmung 87 auf, die in gleicher Weise wie der Mitnehmer 73 des Trägerteils 65 profiliert ist, so dass auch der Gegenhalter 85 drehfest mit dem Trägerteil 65 verbunden ist.

Sowohl der Gegenhalter 85 wie auch die Bremsplatten 32 und die Bremsbeläge 33 sind linearbeweglich auf dem Mitnehmer 73 des Trägerteils 65 gelagert und werden durch die Krafteinwirkung der Wendelfeder 35 sowie durch eine Krafteinwirkung der Einstellschraube 48 an einer axialen Bewegung weitestgehend gehindert. Die Einstellschraube 48 ermöglicht eine Einstellung einer Spaltweite zwischen der Stirnfläche 86 des Gegenhalters 85 und den Wendelfedern 35 und hierdurch eine Einstellung einer auf die Bremsplatten 32 und die Bremsbeläge 33 wirkenden Normalkraft. Hierdurch kann ein zwischen dem Koppelteil 11 und der Adapterhülse 7 übertragbares Bremsmoment variiert werden und bedarfsgemäß eingestellt werden.

Bei einer Montage der Bremseinrichtung 31 gemäß der Figur 2 ist folgende Vorgehensweise vorgesehen: zunächst wird der Gewindeeinsatz 47 in die Längsbohrung 46 mit Hilfe eines geeigneten Setzwerkzeugs eingeschraubt. Ferner werden die Gelenkbuchse 15 bzw. 16 in das entsprechende Koppelteil 11 bzw. 12 eingepresst. Anschließend wird die Adapterhülse 7 nach Montage des, insbesondere als O-Ring ausgebildeten, Gleitrings 53 auf den Schaft 41 des Koppelteils 11 aufgeschoben und gelangt hierbei mit ihrem nicht dargestellten Innengewinde (der Innengewindehülse 56) in Eingriff mit dem Gewindeabschnitt 43. Anschließend wird die Adapterhülse 7 unter Ausnutzung der von der Innengewindehülse 56 und dem Gewindeabschnitt 43 gebildeten Gewindeanordnung 30 auf das Koppelteil 11 aufgeschraubt. Anschließend wird die Koppelhülse 66 des Trägerteils 65 auf den Koppelabschnitt 44 aufgeschoben, bis die Querbohrung 68 in Überdeckung mit der Aufnahmebohrung 45 gelangt ist, um anschließend die Befestigungsschraube 69 zur Verbindung von Trägerteil 65 und Koppelteil 11 einzuschrauben. In einem nachfolgenden Schritt werden die Wendelfedern 35 in die jeweiligen Führungsbohrung 72 im Trägerteil 65 eingesetzt und dann jeweils in abwechselnder Reihenfolge die Bremsplatten 32 und die Bremsbeläge 33 auf den Mitnehmer 73 aufgesetzt. Anschließend erfolgt unter Verwendung des Gegenhalters 85 und der Einstellschraube 48 eine Komprimierung der Wendelfedern 35, bis ein gewünschtes Bremsmoment zwischen dem Koppelteil 11 und der Adapterhülse 7 verwirklicht ist.

Anschließend kann beispielhaft vorgesehen sein, dass die in der Figur 2 nicht dargestellte Koppelstange mit dem becherförmig ausgebildeten Endstück 5 gemäß der Figur 1, das mit einem Innengewinde versehen sein kann, auf den mit einem korrespondierenden Außengewinde versehenen Bereich der Innengewindehülse 56 aufgeschraubt wird, wobei insbesondere vorgesehen werden kann, dass die Koppelstange 2 durch Verkleben und/oder Verstemmen mit der Adapterhülse 7 gesichert wird.

Bei einer Rotation der Adapterhülse 7 gegenüber dem Koppelteil 11 erfolgt eine Drehmomenteinleitung von den Seitenwänden 60 der Führungsschlitze 59 auf die Vorsprünge 81 der Bremsplatten 32, wodurch eine relative Rotationsbewegung der Bremsplatten 32 gegenüber den drehfest am Trägerteil 65 aufgenommenen Bremsbelägen 33 erfolgt. Ein hierdurch hervorgerufenes Bremsmoment ist von der Normalkraft, die durch die Wendelfedern 35 längs der Mittelachse 3 auf die Reibanordnung 82 ausgeübt wird, sowie von einem Reibungskoeffizienten zwischen den Bremsplatten 32 und den Bremsbelägen 33 sowie einer geometrischen Ausdehnung der Bremsplatten 32 und der Bremsbeläge 33 abhängig.

Das Reibmoment der Reibanordnung 82 wird über die formschlüssig am Mitnehmer 73 aufgenommenen Bremsbeläge 33 auf den Mitnehmer 73 und damit über das Trägerteil 65 auf das Koppelteil 11 übertragen.

Bei der in Figur 3 dargestellten, nicht zur Erfindung gehörenden Ausführungsform einer Bremseinrichtung 91 weist die Adapterhülse 92 eine teilweise abweichende Gestaltung gegenüber der Adapterhülse 7 auf, wobei für identisch gestaltete Funktionsabschnitte die gleichen Bezugszeichen gewählt sind und keine neuerliche Beschreibung erfolgt.

Die Adapterhülse 92 unterscheidet sich von der Adapterhülse 7 durch einen abweichend gestalten dritten Funktionsabschnitt, der nicht als Innengewindehülse sondern als Innenhülse 95 ausgebildet ist und eine nicht näher dargestellte, koaxial zur Mittelachse 3 ausgebildete kreiszylindrische, von einer axialen Stirnfläche 96 ausgehende und in Richtung des Koppelteils 11 erstreckte Ausnehmung umfasst. Diese Ausnehmung ist zur reibschlüssigen Aufnahme einer anstelle des Trägerteils 65 vorgesehenen Spreizhülse 97 ausgebildet. Die Spreizhülse 97 weist eine kreiszylindrisch ausgebildete Außenoberfläche 98 sowie eine rein exemplarisch zumindest im Wesentlichen kreiszylindrisch ausgebildete Koppelausnehmung 99 auf. Die Koppelausnehmung 99 ist geometrisch an ein Bremsteil 102 angepasst und ermöglicht eine linearbewegliche und drehmomentübertragende Verbindung zwischen der Spreizhülse 97 und dem Bremsteil 102. Beispielhaft ist vorgesehen, dass das Bremsteil 102 für eine drehfeste und ortsfeste Anbringung am Koppelbschnitt 44 des Koppelteils 11 ausgebildet ist und hierzu eine rein exemplarisch kreiszylindrisch ausgebildete Ausnehmung 103 mit einem an den Koppelbschnitt 44 angepassten Innendurchmesser 104 aufweist. Ferner ist vorgesehen, dass an einer im Wesentlichen kreiszylindrisch ausgebildeten Außenoberfläche 105 des Bremsteils 102 zusätzlich zu einer Querbohrung 106, die zur Aufnahme einer Befestigungsschraube 69 ausgebildet ist, zwei jeweils längs der Mittelachse 3 erstreckte Längsnuten 107 eingebracht sind. In den beiden Längsnuten 107 ist jeweils ein Zylinderstift 108 eingelegt, der in radialer Richtung geringfügig über die Außenoberfläche 105 hinausragt und der für einen Eingriff in eine Längsnut 109 bzw. 110 ausgebildet ist, die in die Koppelausnehmung 99 eingebracht sind. Hierdurch wird die gewünschte linearbewegliche und drehfeste Kopplung zwischen dem Koppelteil 11 und dem daran festgelegten Bremsteil 102 und der Spreizhülse 97 gewährleistet. Die Spreizhülse 97 stellt ihrerseits die reibschlüssige Bremsmomentübertragung gegenüber der Adapterhülse 92 sicher. Um eine Axialbewegung der Spreizhülse 97 zu begrenzen ist eine Anschlagschraube 94 vorgesehen, die in den Gewindeeinsatz 47 des Koppelteils 11 eingeschraubt werden kann. Bei einer derartigen Ausgestaltung der Bremseinrichtung 91 ist das Reibmoment zwischen Koppelteil 11 und Adapterhülse 92 konstruktiv festgelegt.

Um bei der Bremseinrichtung 91 ein Bremsmoment einstellen zu können, sind die Koppelausnehmung 99 der Spreizhülse 97 und die Außenoberfläche 105 des Bremsteils 102 in nicht näher dargestellter Weise korrespondierend zueinander konusabschnittsförmig ausgebildet. Bei dieser konstruktiven Variante kann durch eine relative Verlagerung der Spreizhülse 97 gegenüber dem Bremsteil 102 mit Hilfe der Anschlagschraube 94 eine Einstellung eins Außendurchmessers der Spreizhülse 97 vorgenommen werden, woraus die gewünschte Reibmomenteinstellung gegenüber der Adapterhülse 92 resultiert.

## Patentansprüche

1. Koppeleinrichtung zur kraftübertragenden Kopplung zweier Komponenten, mit einem ersten Koppelteil (11), das eine erste Koppelschnittstelle (13) umfasst, die für eine Festlegung an einer ersten Komponente ausgebildet ist, mit einem zweiten Koppelteil (12), das eine zweite Koppelschnittstelle (14) umfasst, die für eine Festlegung an einer zweiten Komponente ausgebildet ist, sowie mit einer Koppelstange (2), die mit einem ersten Endbereich (5) drehbeweglich um eine Drehachse (3) mit dem ersten Koppelteil (11) verbunden ist und die mit einem zweiten Endbereich (6) drehbeweglich um die Drehachse (3) mit dem zweiten Koppelteil (12) verbunden ist, wobei der erste Endbereich (5) und das erste Koppelteil (11) eine erste Gewindeanordnung (30) für eine Einstellung eines Abstands (20) zwischen dem ersten Koppelteil (11) und dem zweiten Koppelteil (12) bilden, wobei der ersten Gewindeanordnung (30) eine erste Bremseinrichtung (31) zugeordnet ist, die für eine, insbesondere ausschließlich, reibschlüssige Bremsmomentübertragung zwischen dem ersten Koppelteil (11) und dem ersten Endbereich (5) ausgebildet ist, wobei der erste Endbereich (5) der Koppelstange (2) eine Adapterhülse (7) umfasst, an der ein Stangenabschnitt und/oder ein Rohrabschnitt der Koppelstange (2) festgelegt ist und die einen ersten Gewindebereich (56) umfasst, der mit einem ersten Gewindeabschnitt (43) des ersten Koppelteils (11) verschraubt ist, um die erste Gewindeanordnung (31) zu bilden und wobei die erste Bremseinrichtung (31) einen drehfest am ersten Koppelteil (11) aufgenommenen Bremsbelag (33) und eine drehfest am ersten Endbereich (5) aufgenommene Bremsplatte (32) umfasst, wobei der Bremsbelag (33) längs der Drehachse (3) verschieblich am ersten Koppelteil (11) aufgenommen ist und/oder wobei die Bremsplatte (32) längs der Drehachse (3) verschieblich am ersten Endbereich (5) aufgenommen ist, **dadurch gekennzeichnet, dass** die erste Bremseinrichtung (31) eine Einstellanordnung (48) zur Einstellung einer längs der Drehachse (3) ausgerichteten Normalkraftkomponente auf den Bremsbelag (33) und die Bremsplatte (32) umfasst.

2. Koppeleinrichtung nach Anspruch 1, **dadurch gekennzeichnet, dass** die erste Bremseinrichtung (31) für eine stufenlose Drehbewegung zwischen dem ersten Koppelteil (11) und dem ersten Endbereich (5) ausgebildet ist und/oder dass der zweite Endbereich (6) und das zweite Koppelteil (12) eine zweite Gewindeanordnung (30) für eine Einstellung eines Abstands (20) zwischen dem ersten Koppelteil (11) und dem zweiten Koppelteil (12) bilden und/oder dass der zweiten Gewindeanordnung (30) eine zweite Bremseinrichtung (31) zugeordnet ist, die gleichartig wie die erste Bremseinrichtung (31) insbesondere identisch zur ersten Bremseinrichtung (31), ausgebildet ist.

3. Koppeleinrichtung nach Anspruch 1, **dadurch gekennzeichnet, dass** der erste Gewindeabschnitt (43) des ersten Koppelteils (11) als Außengewinde ausgebildet ist und dass der erste Gewindebereich (56) der Adapterhülse (7) als Innengewinde ausgebildet ist.

4. Koppeleinrichtung nach Anspruch 1, **dadurch gekennzeichnet, dass** die erste Bremseinrichtung (31) eine zwischen dem ersten Koppelteil (11) und dem ersten Endbereich (5) angeordnete Federanordnung (34) umfasst, die für eine Einleitung einer längs der Drehachse (3) ausgerichteten Normalkraftkomponente auf den Bremsbelag (33) und die Bremsplatte (32) ausgebildet ist.

5. Koppeleinrichtung nach Anspruch 1, 3 oder 5,, **dadurch gekennzeichnet, dass** an einem dem ersten Koppelteil (11) abgewandten Endbereich der Adapterhülse (7) ein koaxial zur Drehachse (3) und zur Gewindeanordnung (30) ausgebildeter Rohrabschnitt (57) ausgebildet ist, der an einer Rohrwand eine längs der Drehachse (3) erstreckte Stütznut (59) aufweist und der die Bremsplatte (32) und den Bremsbelag (33) umgibt.

6. Koppeleinrichtung nach Anspruch 1, 4 oder 5, **dadurch gekennzeichnet, dass** eine größte Oberfläche (36) der Bremsplatte (32) und eine größte Oberfläche (37) des Bremsbelags (33) jeweils quer zur Drehachse (3) ausgerichtet sind, dass die Bremsplatte (32) wenigstens einen in radialer Richtung zur Drehachse (3) erstreckten Vorsprung (81) aufweist, der in die Stütznut (59) eingreift und dass der Bremsbelag (33) und das erste Koppelteil (11) eine formschlüssig drehfeste Verbindung ausbilden.

7. Koppeleinrichtung nach Anspruch 1, 4, 5 oder 6, **dadurch gekennzeichnet, dass** die Bremsplatte (32) und der Bremsbelag (33) längs der Drehachse (3) auf einem dem ersten Koppelteil (11) zugehörigen Trägerteil (65) aufgereiht sind, wobei das Trägerteil (65) mit einer unrunden Außengeometrie (73) freigängig in eine Freilaufausnehmung (79) in der Bremsplatte (32) und formschlüssig in eine Koppelausnehmung (80) im Bremsbelag (33) eingreift.

8. Koppeleinrichtung nach Anspruch 7, **dadurch gekennzeichnet, dass** die Bremsplatte (32) und der Bremsbelag (33) zwischen einer axial ausgerichteten Stirnfläche (71) des Trägerteils (65) und einer axial ausgerichteten Anlagefläche (86) eines drehfest und linearbeweglich sowie längs der Drehachse (3) mit einstellbarem Abstand am Trägerteil (65) angebrachten Gegenhalters (85) aufgenommen sind, der mit dem Trägerteil (65) eine Einstellanordnung zur Einstellung einer längs der Drehachse (3) ausgerichteten Normalkraftkomponente auf den Bremsbelag (33) und die Bremsplatte (32) ausbildet.

9. Koppeleinrichtung nach einem der Ansprüche 1, 5, 6, 7 oder 8 in Verbindung mit Anspruch 4, **dadurch gekennzeichnet, dass** die Federanordnung (34) wenigstens eine in axialer Richtung längs der Drehachse vorgespannte Feder aus der Gruppe: Wendelfeder (35), Wellringfeder, Federring, umfasst.

10. Koppeleinrichtung nach Anspruch 7, 8 oder 9, **dadurch gekennzeichnet, dass** mehrere Bremsplatten (32) und mehrere Bremsbeläge (33) längs der Drehachse (3) abwechselnd auf dem Trägerteil (65) aufgereiht sind.

## Claims

1. Coupler for a force-transmitting coupling of two components, comprising a first coupling part (11; 111) having a first coupling interface (13) designed for fixing to a first component, comprising a second coupling part (12) having a second coupling interface (14) designed for fixing to a second component, and further comprising a coupling rod (2), having a first end portion (5) which is rotable connected to the first coupling part (11; 111) about an axis of rotation (3) and having a second end portion (6) which is rotable connected to the second coupling part (12) about the axis of rotation (3), wherein the first end portion (5) and the first coupling part (11) comprise a first thread arrangement (30) for adjusting a distance (20) between the first coupling part (11) and the second coupling part (12), wherein the first thread arrangement (30) is assigned a first brake system (31) which is designed for, in particular exclusively, frictional braking torque transmission between the first coupling part (11) and the first end portion (5), wherein the first end portion (5) of the coupling rod (2) comprises an adapter sleeve (7) to which a rod portion and/or a tube portion of the coupling rod (2) is fixed and which comprises a first threaded portion (56) screwed to a first threaded section (43) of the first coupling member (11) to form the first threaded assembly (30) and wherein the first brake system (31) comprises a friction pad (33) received non-rotatably on the first coupling part (11) and a brake plate (32) received non-rotatably on the first coupling part (11), wherein the friction pad (33) is received on the first coupling part (11) displaceably along the axis of rotation (3) and/or wherein the brake plate (32) is received on the first end portion (5) displaceably along the axis of rotation (3), **characterized in that** the first brake system (31) comprises an adjusting arrangement (48) for adjusting a normal force component aligned along the axis of rotation (3) on the friction pad (33) and the brake plate (32).

2. Coupler according to claim 1, **characterized in that** the first brake system (31) is designed for a stepless rotary movement of the first coupling part (11) relative to the first end portion (5) and/or **in that** the second end portion (6) and the second coupling part (12) have a second thread arrangement (30) for setting a distance (20) between the first coupling part (11) and the second coupling part (12) and/or **in that** the second thread arrangement (30) is assigned a second brake system (31) which is designed in the same way as the first brake system (31), in particular identically to the first brake system (31) .

3. Coupler according to claim 1, **characterized in that** the first threaded section (43) of the first coupling part (11; 111) is formed as an external thread and that the first threaded portion (56) of the adapter sleeve (7) is formed as an internal thread.

4. Coupler according to claim 1, **characterized in that** the first brake system (31) comprises a spring arrangement (34) arranged between the first coupling part (11) and the first end portion (5), which spring arrangement (34) is designed for introducing a normal force component aligned along the axis of rotation (3) onto the friction pad (33) and the brake plate (32) .

5. Coupler according to claim 1, 3 or 5, **characterized in that** at an end portion of the adapter sleeve (7) facing away from the first coupling part (11) there is formed a tube section (57) which is formed coaxially with the axis of rotation (3) and with the thread arrangement (30), which has on a tube wall a supporting groove (59) extending along the axis of rotation (3) and which surrounds the brake plate (32) and the friction pad (33).

6. Coupler according to claim 1, 4 or 5, **characterized in that** a largest surface (37) of the brake plate (32) and a largest surface (36) of the friction pad (33) are each oriented transversely to the axis of rotation (3), **in that** the brake plate (32) has at least one projection (81) which extends in the radial direction with respect to the axis of rotation (3) and engages in the supporting groove (59), in particular in a positively locking rotationally fixed manner, and **in that** the friction pad (33) and the first coupling part (11) form a positively locking rotationally fixed connection.

7. Coupler according to claim 1, 4 or 5, **characterized in that** the brake plate (32) and the friction pad (33) are lined up along the axis of rotation (3) on a carrier part (65) associated with the first coupling part (11), the carrier part (65) engaging with a non-circular outer geometry (73) freely in a free-wheeling recess (79) in the brake plate (32) and positively in a coupling recess (80) in the friction pad (33).

8. Coupler according to claim 7, **characterized in that** the brake plate (32) and the friction pad (33) are received between an axially aligned end face (71) of the carrier part (65) and an axially aligned contact face (86) of a counter-holder (85) which is mounted on the carrier part (65) in a rotationally fixed and linearly movable manner and at an adjustable distance along the axis of rotation (3), which forms with the carrier part (65) an adjusting arrangement for adjusting a normal force component aligned along the axis of rotation (3) on the friction pad (33) and the brake plate (32).

9. Coupler according to one of the claims 1, 5, 6, 7 or 8 in connection with claim 4, **characterized in that** the spring arrangement (34) comprises at least one spring preloaded in axial direction along the axis of rotation from the group: helical spring (35), wave ring spring, spring ring.

10. Coupler according to claim 7, 8 or 9, **characterized in that** a plurality of brake plates (32) and a plurality of friction pads (33) are alternately lined up along the axis of rotation (3) on the carrier part (65).

## Revendications

1. Dispositif de couplage pour coupler avec transmission de force deux composants, avec une première partie de couplage (11), qui comprend une première interface de couplage (13), qui est réalisée pour une fixation sur un premier composant, avec une deuxième partie de couplage (12), qui comprend une deuxième interface de couplage (14), qui est réalisée pour une fixation sur un deuxième composant, ainsi qu'avec une tige de couplage (2), qui est reliée par une première zone d'extrémité (5) de manière mobile en rotation autour d'un axe de rotation (3) à la première partie de couplage (11) et qui est reliée par une deuxième zone d'extrémité (6) de manière mobile en rotation autour de l'axe de rotation (3) à la deuxième partie de couplage (12), dans lequel la première zone d'extrémité (5) et la première partie de couplage (11) forment un premier ensemble fileté (30) pour un réglage d'une distance (20) entre la première partie de couplage (11) et la deuxième partie de couplage (12), dans lequel est associé au premier ensemble fileté (30) un premier dispositif de freinage (31), qui est réalisé pour une transmission de couple de freinage, en particulier exclusivement, à friction entre la première partie de couplage (11) et la première zone d'extrémité (5), dans lequel la première zone d'extrémité (5) de la tige de couplage (2) comprend une douille d'adaptateur (7), sur laquelle une section de tige et/ou une section de tuyau de la tige de couplage (2) sont fixées et qui comprend une première zone filetée (56), qui est vissée à la première section filetée (43) de la première partie de couplage (11) pour former le premier ensemble fileté (31) et dans lequel le premier dispositif de freinage (31) comprend une garniture de freinage (33) logée de manière solidaire en rotation sur la première partie de couplage (11) et une plaque de freinage (32) logée de manière solidaire en rotation sur la première zone d'extrémité (5), dans lequel la garniture de freinage (33) est logée sur la première partie de couplage (11) de manière à pouvoir coulisser le long de l'axe de rotation (3) et/ou dans lequel la plaque de freinage (32) est logée sur la première zone d'extrémité (5) de manière à pouvoir coulisser le long de l'axe de rotation (3), **caractérisé en ce que** le premier dispositif de freinage (31) comprend un ensemble de réglage (48) pour régler une composante de force normale orientée le long de l'axe de rotation (3) sur la garniture de freinage (33) et la plaque de freinage (32).

2. Dispositif de couplage selon la revendication 1, **caractérisé en ce que** le premier dispositif de freinage (31) est réalisé pour un déplacement en rotation continu entre la première partie de couplage (11) et la première zone d'extrémité (5), et/ou que la deuxième zone d'extrémité (6) et la deuxième partie de couplage (12) forment un deuxième ensemble fileté (30) pour un réglage d'une distance (20) entre la première partie de couplage (11) et la deuxième partie de couplage (12), et/ou qu'est associé au deuxième ensemble fileté (30) un deuxième dispositif de freinage (31) qui est réalisé de manière similaire au premier dispositif de freinage (31), en particulier de manière identique au premier dispositif de freinage (31).

3. Dispositif de couplage selon la revendication 1, **caractérisé en ce que** la première section filetée (43) de la première partie de couplage (11) est réalisée en tant que filetage extérieur, et que la première zone filetée (56) de la douille d'adaptateur (7) est réalisée en tant que filetage intérieur.

4. Dispositif de couplage selon la revendication 1, **caractérisé en ce que** le premier dispositif de freinage (31) comprend un ensemble formant ressort (34) disposé entre la première partie de couplage (11) et la première zone d'extrémité (5), qui est réalisé pour une application d'une composante de force normale orientée le long de l'axe de rotation (3) sur la garniture de freinage (33) et la plaque de freinage (32).

5. Dispositif de couplage selon la revendication 1, 3 ou 5, **caractérisé en ce qu'**est réalisée sur une zone d'extrémité, opposée à la première partie de couplage (11), de la douille d'adaptateur (7), une section de tuyau (57) réalisée de manière coaxiale par rapport à l'axe de rotation (3) et par rapport à l'ensemble fileté (30), qui présente sur une paroi de tube une rainure d'appui (59) s'étendant le long de l'axe de rotation (3) et qui entoure la plaque de freinage (32) et la garniture de freinage (33).

6. Dispositif de couplage selon la revendication 1, 4 ou 5, **caractérisé en ce qu'**une plus grande surface (36) de la plaque de freinage (32) et une plus grande surface (37) de la garniture de freinage (33) sont orientées respectivement de manière transversale par rapport à l'axe de rotation (3), que la plaque de freinage (32) présente au moins une partie faisant saillie (81) s'étendant dans une direction radiale par rapport à l'axe de rotation (3), qui vient en prise avec la rainure d'appui (59), et que la garniture de freinage (33) et la première partie de couplage (11) réalisent une liaison solidaire en rotation par complémentarité de forme.

7. Dispositif de couplage selon la revendication 1, 4, 5 ou 6, **caractérisé en ce que** la plaque de freinage (32) et la garniture de freinage (33) sont alignées le long de l'axe de rotation (3) sur une partie de support (65) appartenant à la première partie de couplage (11), dans lequel la partie de support (65) vient en prise avec une géométrie extérieure (73) non ronde librement avec un évidement de roue libre (79) dans la plaque de freinage (32) et par complémentarité de forme avec un évidement de couplage (80) dans la garniture de freinage (33).

8. Dispositif de couplage selon la revendication 7, **caractérisé en ce que** la plaque de freinage (32) et la garniture de freinage (33) sont logées entre une face frontale (71) orientée axialement de la partie de support (65) et une face d'appui (86) orientée axialement d'un système de contre-maintien (85) installé de manière solidaire en rotation et de manière mobile linéairement ainsi que le long de l'axe de rotation (3) à une distance réglable sur la partie de support (65), qui réalise avec la partie de support (65) un ensemble de réglage pour régler une composante de force normale orientée le long de l'axe de rotation (3) sur la garniture de freinage (33) et la plaque de freinage (32).

9. Dispositif de couplage selon l'une quelconque des revendications 1, 5, 6, 7 ou 8 en lien avec la revendication 4, **caractérisé en ce que** l'ensemble de ressort (34) comprend au moins un ressort précontraint dans une direction axiale le long de l'axe de rotation parmi le groupe : ressort hélicoïdal (35), ressort annulaire ondulé, anneau élastique.

10. Dispositif de couplage selon la revendication 7, 8 ou 9, **caractérisé en ce que** plusieurs plaques de freinage (32) et plusieurs garnitures de freinage (33) sont alignées le long de l'axe de rotation (3) en alternance sur la partie de support (65).
